# EUROPEAN PATENT APPLICATION

(11) **EP 4 837 840 A1**
(43) Date of publication of application: **11.11.2026**
(21) Application number: 26177425.1
(22) Date of filing: 08.05.2026
(51) Int. Cl.: B64D 39/04, B64D 39/00, B64F 1/28, B67D 7/00, F16L 11/22

(54) **AERIAL REFUELING**

(30) Priority: 09.05.2025 US 202563803221 P
(71) Applicant: Eaton Intelligent Power Limited, Dublin 4, D04 Y0C2 (IE)
(72) Inventor: SIPPRELL, Stephen E., Dublin, 4, D04 Y0C2 (IE)
(74) Representative: Jolliffe, Jack Louis

(57) **Abstract**

A refueling hose has a rigid inner conduit disposed within a flexible outer conduit. The inner conduit is sufficiently rigid to enable fuel flow through the hose even when the hose is wound on a reel and the flexible outer conduit is disposed in a collapsed state. The inner conduit enables fuel to enter the outer conduit from the distal end of the outer conduit to fill the outer conduit during deployment of the hose, thereby transitioning the hose to a stable inflated state. The inner conduit also enables fuel to exit the outer conduit from the distal end and travel back towards the reel as the hose is retracted onto the reel, thereby enabling the transition of the outer conduit back to the collapsed state.

## Description

### CROSS-REFERENCE TO RELATED APPLICATIONS

This application claims the benefit of U.S. Provisional Application No. 63/803,221, filed May 09, 2025, and titled "Aerial Refueling".

### BACKGROUND

During aerial refueling, a tanker aircraft flies in front of a receiver aircraft and transfers fuel through a hose. Some types of aerial refueling utilize a boom extended from the tanker aircraft to a receptacle on the receiver aircraft. Other types of aerial refueling utilize a probe and drogue in which a flexible refueling hose is paid out from a reel to trail behind the tanker aircraft. A reception coupling terminates the end of the refueling hose. A drogue is attached to the reception coupling and forms a funnel shape to help guide a probe nozzle attached to the receiver aircraft to the reception coupling. The nozzle of the probe engages the reception coupling to fluidly connect the refueling hose to a fuel tank of the receiver aircraft. After refueling is complete, the probe is withdrawn from the reception coupling and the refueling hose is then retracted back into the tanker aircraft by winding the refueling hose back onto the reel.

### SUMMARY

In accordance with certain aspects of the disclosure, a method of aerial refueling of an aircraft includes refueling a receiver aircraft from a tanker aircraft via a refueling hose while the refueling hose is disposed in an in-trail position; and deflating the refueling hose as the refueling hose is wound onto a reel to stow the refueling hose in a lay-flat configuration. The refueling hose has a constant transverse cross-sectional shape when in the in-trail position.

In accordance with certain aspects of the disclosure, the method includes deploying the refueling hose to the in-trail position by paying out the distal end of the refueling hose from the reel; and inflating an outer conduit of the refueling hose as the refueling hose is paid out from the reel to create the constant transverse cross-sectional shape when in the in-trail position.

In certain implementations, deflating the refueling hose includes winding the refueling hose onto the reel, thereby pushing fuel disposed within a flexible outer conduit of the refueling hose towards a distal end of the refueling hose; and enabling the pushed fuel to enter a rigid inner conduit of the refueling hose at the distal end of the refueling hose, thereby evacuating the fuel from the outer conduit.

In certain examples, the outer conduit is collapsed around the inner conduit when the refueling hose is disposed in the lay-flat configuration.

In accordance with certain aspects of the disclosure, a hose for use in aerial refueling includes an outer conduit and an inner conduit. The outer conduit extends along a first length between proximal and distal ends. The outer conduit is sufficiently flexible to enable collapse of a transverse cross-sectional shape of the outer conduit when empty. The inner conduit is disposed within the outer conduit. The inner conduit extends along a second length between first and second ends with the first end disposed at the proximal end of the outer conduit and the second end disposed at the distal end of the outer conduit. The second end of the inner conduit is open to an interior of the outer conduit at the distal end of the outer conduit. The inner conduit is sufficiently rigid to maintain a transverse cross-sectional shape of the inner conduit along the second length even when empty.

In certain implementations, the inner conduit is one of a plurality of inner conduits within the flexible outer conduit. Each of the inner conduits is open to the interior of the flexible outer conduit at the distal end of the refueling hose.

In certain implementations, the inner conduits are open to the interior of the outer conduit at both the proximal and distal ends of the outer conduit.

In certain implementations, a method of aerial refueling an aircraft includes: paying out a distal end of a refueling hose from a reel carried by a tanker aircraft; pumping fuel from the tanker aircraft through a rigid inner conduit within the refueling hose towards the distal end of the refueling hose as the refueling hose is being paid out from the reel; and enabling the fuel to pass from the rigid inner conduit into a flexible outer conduit of the refueling hose at the distal end of the refueling hose to inflate the flexible outer conduit as the refueling hose is being paid out from the reel.

A variety of additional inventive aspects will be set forth in the description that follows. The inventive aspects can relate to individual features and to combinations of features. It is to be understood that both the forgoing general description and the following detailed description are exemplary and explanatory only and are not restrictive of the broad inventive concepts upon which the embodiments disclosed herein are based.

### BRIEF DESCRIPTION OF THE DRAWINGS

The accompanying drawings, which are incorporated in and constitute a part of the description, illustrate several aspects of the present disclosure. A brief description of the drawings is as follows:
FIG. 1 is a diagram showing a probe-drogue style aerial refueling arrangement between a tanker aircraft and a receiver aircraft.
FIG. 2 illustrates an example hose reel, refueling hose, and drogue arrangement suitable for use in the aerial refueling arrangement of FIG. 1.
FIG. 3 is an axial cross-section of an example reception coupling suitable for use in the drogue arrangement of FIG. 2.
FIG. 4 is a transverse cross-section of a deployed section of an example refueling hose suitable for use in the aerial refueling arrangement of FIG. 1, the deployed section of hose being configured in an inflated state.
FIG. 5 is a transverse cross-section of an undeployed section of the hose of FIG. 4, the undeployed section of hose being configured in a lay-flat state.
FIG. 6 is an axial cross-section of the refueling hose of FIG. 5, the refueling hose extending between a hose reel and a reception coupling.
FIG. 7 shows an undeployed section of the refueling hose of FIGS. 4-6 stowed on a hose reel, the undeployed section being configured in a lay-flat state.
FIG. 8 shows a deployed section of the refueling hose being transitioned to the inflated state using fuel flow from the inner conduits.
FIG. 9 shows fuel flowing through both outer and inner conduit interiors of a deployed section of the refueling hose of FIG. 8.
FIG. 10 shows fuel being evacuated from the outer conduit using the inner conduits to transition the deployed section of hose back to the lay-flat state for storage on the reel.
FIG. 11 shows an example inner conduit suitable for use in any of the refueling hoses of FIGS. 1-10, the inner conduit having a support framework.
FIG. 12 shows an example refueling hose having outer and inner conduits monolithically formed as a single piece, the hose being configured in the inflated state.
FIG. 13 shows the refueling hose of FIG. 12 configured in the lay-flat state.
FIG. 14 shows an example refueling hose having separately fabricated outer and inner conduits assembled in a fixed configuration, the hose being configured in the inflated state.
FIG. 15 shows the refueling hose of FIG. 14 configured in the lay-flat state.
FIG. 16 shows an example refueling hose having three inner conduits, the hose being configured in the inflated state.
FIG. 17 shows the refueling hose of FIG. 16 configured in the lay-flat state.
FIG. 18 shows an example refueling hose having four inner conduits, the hose being configured in the inflated state.
FIG. 19 shows the refueling hose of FIG. 18 configured in the lay-flat state.

### DETAILED DESCRIPTION

Reference will now be made in detail to exemplary aspects of the present disclosure that are illustrated in the accompanying drawings. Wherever possible, the same reference numbers will be used throughout the drawings to refer to the same or like parts.

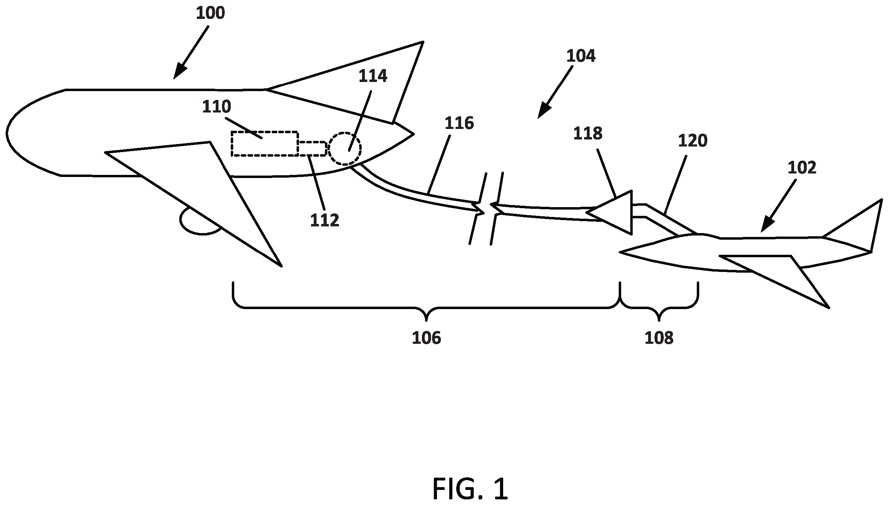

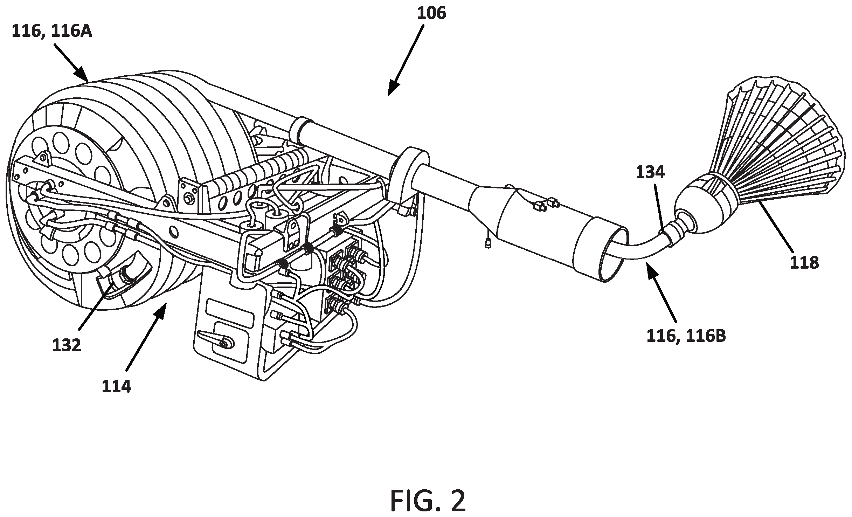

As shown in FIG. 1, a tanker aircraft 100 provides fuel to a receiver aircraft 102 mid-flight using an aerial refueling arrangement 104. The tanker aircraft 100 carries a first part 106 of the aerial refueling arrangement 104 and the receiver aircraft 102 carries a second part 108 of the aerial refueling arrangement 104. The first part 106 includes a fuel storage tank 110, a hose reel 114, a refueling hose 116 mounted to the hose reel 114, and a drogue arrangement 118 terminating a distal end of the refueling hose 116 (e.g., see FIG. 2). In some examples, the first part 106 also may include a fuel pump 112. In other examples, the fuel can be gravity fed. The second part 108 of the aerial refueling arrangement 104 includes a probe 120 with a nozzle. In certain examples, the probe 120 is retractable within the receiver aircraft 102.

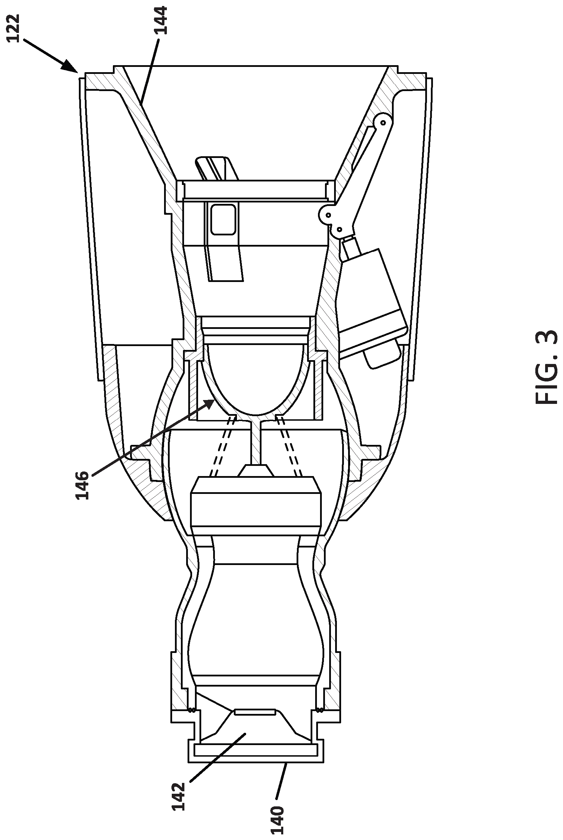

During an aerial refueling operation, the refueling hose 106 is paid out from the hose reel 114 so that a deployed section 116B of the refueling hose 116 and the drogue arrangement 118 trail behind the tanker aircraft 100 in an in-trail position. As the refueling hose 116 is being paid out, the fuel pump 112 begins pumping fuel from the fuel storage tank 110 to a proximal end of the refueling hose 116. The fuel flows along at least part of the refueling hose 116 towards the distal end of the refueling hose 116 as will be described in more detail herein. The receiver aircraft 102 flies the probe 120 into the drogue arrangement 118 to connect a nozzle of the probe 120 to a reception coupling 122 (see FIG. 3) of the drogue arrangement 118. Once the nozzle and reception coupling 122 are engaged, fuel from the refueling hose 116 can flow from the hose 116, through the reception coupling 122, through the probe 120, and into a fuel tank of the receiver aircraft 102.

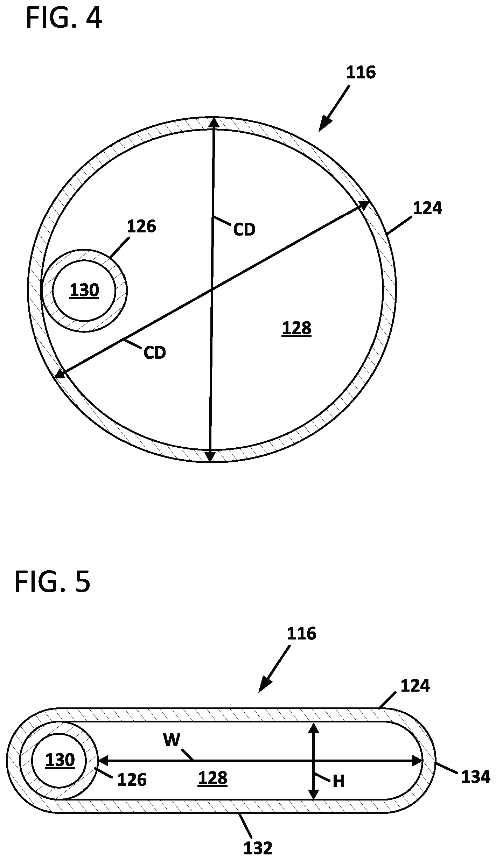

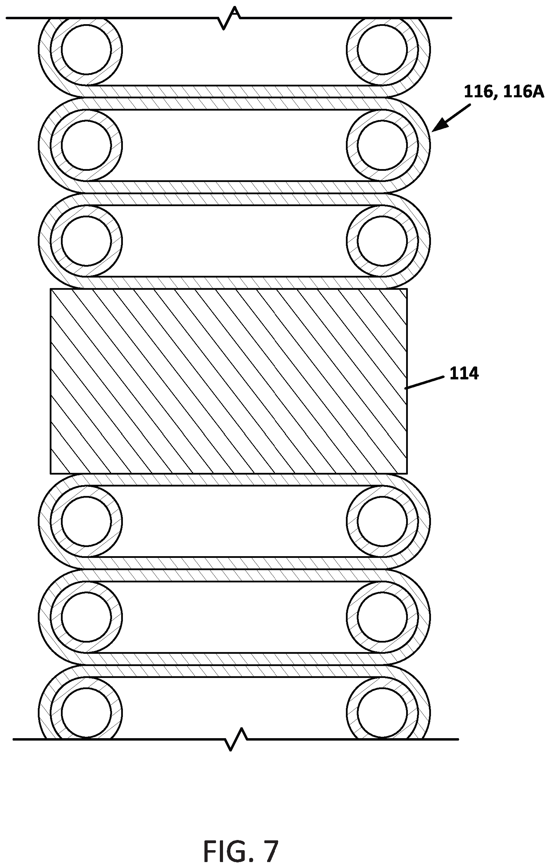

In accordance with certain aspects of the disclosure, the refueling hose 116 is stowed in a lay-flat configuration (e.g., see FIG. 5) while wound on the hose reel 114 (see FIG. 7), but assumes an inflated configuration (see FIG. 4) when deployed to the in-trail position behind the tanker aircraft 100 (see FIG. 1). For example, the undeployed section 116A of the refueling hose 116 is stored in the lay-flat configuration while the deployed section 116B is disposed in the inflated configuration.

In certain implementations, the deployed section 116B of the refueling hose 116 has a constant transverse cross-sectional shape along the length of the deployed section 116A when disposed in the inflated configuration (e.g., see FIG. 4). In certain examples, the transverse cross-sectional shape of the deployed section 116B in the inflated configuration is circular. The circular shape inhibits preferential bending of the deployed section 116B of the refueling hose 116 about any particular axis during flight. Accordingly, the deployed section 116B of the refueling hose 116 remains stable while trailing the tanker aircraft 100. When wound on the hose reel 114 (e.g., see FIG. 4), however, the transverse cross-sectional shape of the refueling hose 116 becomes elongate (e.g., see FIG. 5) as will be discussed in more detail herein.

As shown in FIGS. 4-6, the refueling hose 116 includes an outer conduit 124 and one or more inner conduits 126. The outer conduit 124 extends along a first length L1 between proximal and distal ends 132, 134. The proximal end 132 is coupled to the hose reel 114 and the distal end 134 is coupled to the reception coupling 122. The outer conduit 124 defines an interior 128 and the inner conduit 126 is disposed within the interior 128. The inner conduit 126 extends along a second length L2 between first and second ends 136, 138. The first end 136 of the inner conduit 126 is located at the proximal end 132 of the outer conduit 124 and the second end 138 of the inner conduit 126 is located at the distal end 134 of the outer conduit 124.

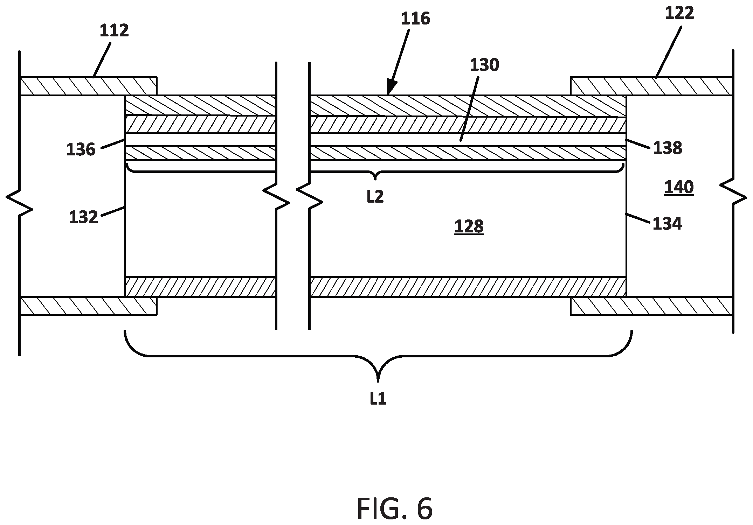

The inner conduit 126 also defines an interior 130 that is separate from the interior 128 of the outer conduit 124 along the second length L2 of the inner conduit 126 (e.g., see FIG. 6). However, the interior 130 of the inner conduit 126 is open to the interior 128 of the outer conduit 124 at least at the distal end 134 of the outer conduit 124 and the second end 138 of the inner conduit 126. In certain examples, the distal end 134 of the outer conduit 124 and the second end 138 of the inner conduit 124 are coupled to an inlet 140 of the reception coupling 122. Both the interior 128 of the outer conduit 124 and the interior 130 of the inner conduit 126 are accessible from an interior region 142 of the reception coupling 122.

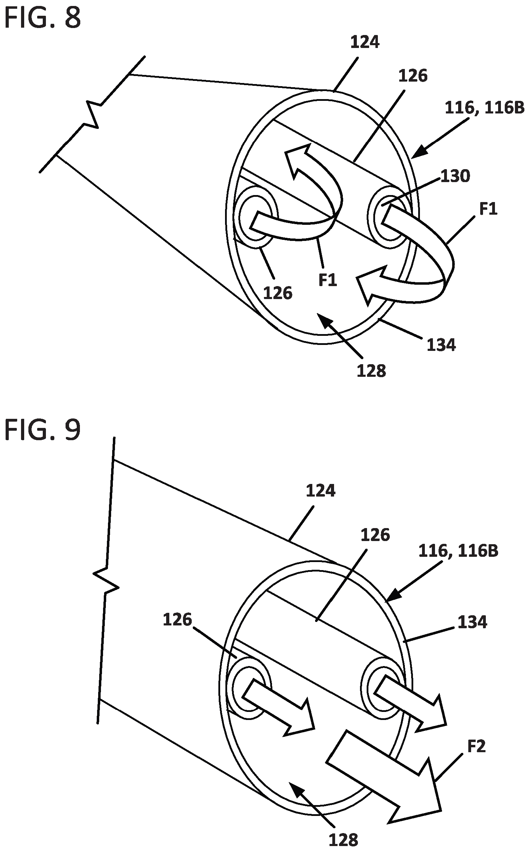

As shown in FIGS. 8-10, the one or more inner conduits 126 are used to fill and evacuate the interior 128 of the outer conduit 124 during deployment and retraction, respectively, of the refueling hose 116. FIG. 8 shows fluid, such as fuel, passing through the second length L2 of the inner conduit 126 from the first end 136 to the second end 138 as the refueling hose 116 is deployed (e.g., unwound) from the reel 114. The inner conduit 126 is sufficiently rigid to maintain its transverse cross-sectional shape even when wound on the reel 114 so that fuel can flow even while a majority of the hose 116 is disposed on the reel 114. An outlet valve 146 (e.g., a spring-loaded poppet valve) of the reception coupling 122 remains closed during deployment. Accordingly, the fuel flows from the inlet volume 142 of the reception coupler 140 into the interior 128 of the outer conduit 128 and flows back towards the reel 114 (see flow F1 of FIG. 8). As the fuel fills the outer conduit interior 128, the outer conduit 124 transitions to the inflated configurations.

When a sufficient section 116B of the refueling hose 116 is deployed and the fuel has fully inflated the deployed section 116B, the probe 120 can be flown into the drogue arrangement 118 and connection can be made to the reception coupling 122. Once connected, the outlet valve 146 opens and allows the fuel within both the outer conduit interior 128 and the inner conduit interior 130 to flow into the probe 120. In certain examples, both the interior 128 of the outer conduit 124 and the interior 130 of the inner conduit 126 are coupled to the fuel pump 112. The fuel pump 112 may direct fuel flow along both the outer conduit interior 128 and the inner conduit interior 130 in parallel (e.g., see FIG. 9) to fuel the receiver aircraft 102 (e.g., see flow F2 of FIG. 9).

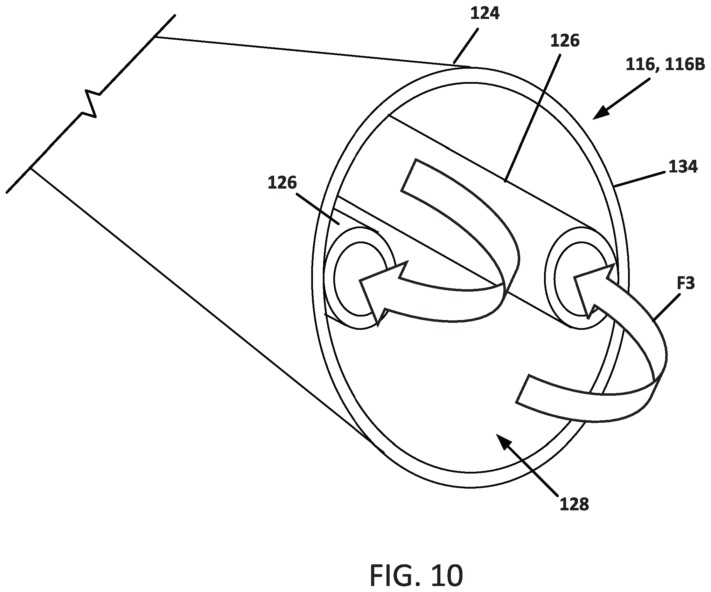

When fueling has finished, the probe 120 disconnects from the drogue arrangement 118 and the outlet valve 146 of the reception coupling 122 closes. The reel 114 begins to wind to retract the deployed section 116B of the refueling hose 116. As the hose 116 is wound onto the reel 114, fuel within the outer conduit interior 128 is pushed towards the reception coupling 112. Within the inlet volume 142 of the reception coupling 140, the fuel passes from the outer conduit interior 128 into the inner conduit interior 130 (e.g., see flow F3 of FIG. 10). Accordingly, the inner conduit 126 is used to evacuate fuel from the outer conduit 124 during retraction. As the fuel is evacuated, the outer conduit 124 collapses to the lay-flat configuration to facilitate winding on the reel 114 (e.g., see FIG. 7).

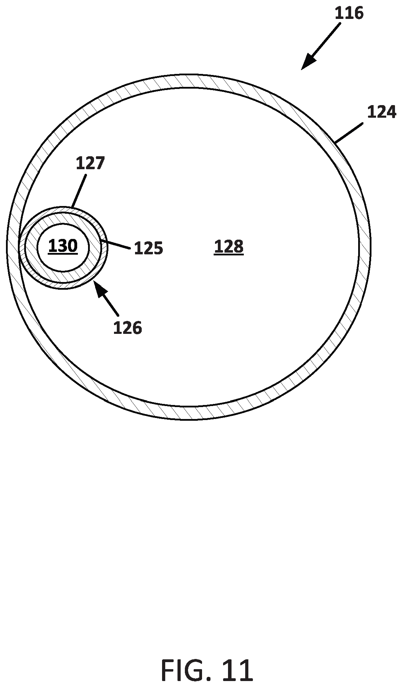

The inner conduit 126 is sufficiently rigid that the inner conduit 126 will maintain the transverse cross-sectional shape of the inner conduit 126 even when devoid of fuel or other fluid. In an example, the inner conduit 126 may be formed of a sufficiently rigid material. In another example, the inner conduit 126 may include a support framework 127 (e.g., a coiled wire, a mesh, an embedded helical support wire, etc.) coupled to a transport element 125 (e.g., see FIG. 11). The support framework 127 maintains the transverse cross-sectional shape of the transport element 125. In some examples, the support framework 127 is disposed around the transport element 125. In other examples, the support framework 127 is disposed within the interior 130 of the transport element 125. In still other examples, the support framework 127 is embedded within the transport element 125 to form the inner conduit 126.

The outer conduit 124 is more flexible than the inner conduit 126. In some implementations, the outer conduit 124 is formed from a less rigid material than the inner conduit 126. In other implementations, however, the outer conduit 124 may be formed from the same material as a transport element 125 of the inner conduit 126. In some such cases, the support framework 127 may add the extra rigidity compared to the outer conduit 124. In other examples, the inner conduit 126 may have a thicker wall compared to the outer conduit 124.

In certain examples, the outer conduit 124 is sufficiently flexible to collapse or deflate as the interior 128 is emptied of fuel or other fluid. For example, as shown in FIG. 4, the outer conduit 124 has a cross-dimension CD (e.g., diameter) that is constant along a full circumference of the outer conduit 124 when disposed in the inflated configuration. However, as shown in FIG. 5, the outer conduit 124 may collapse about the inner conduit 126 to form an elongate shape having a height H and a width W when transitioned to the lay-flat configuration. In certain examples, the height H of the elongate shape is based on a diameter or other cross-dimension of the inner conduit 126. The width W is longer than the height H. For example, the width W of the elongate shape may be at least three times as long as the height H. For example, the width W of the elongate shape may be at least four times as long as the height H. For example, the width W of the elongate shape may be at least five times as long as the height H.

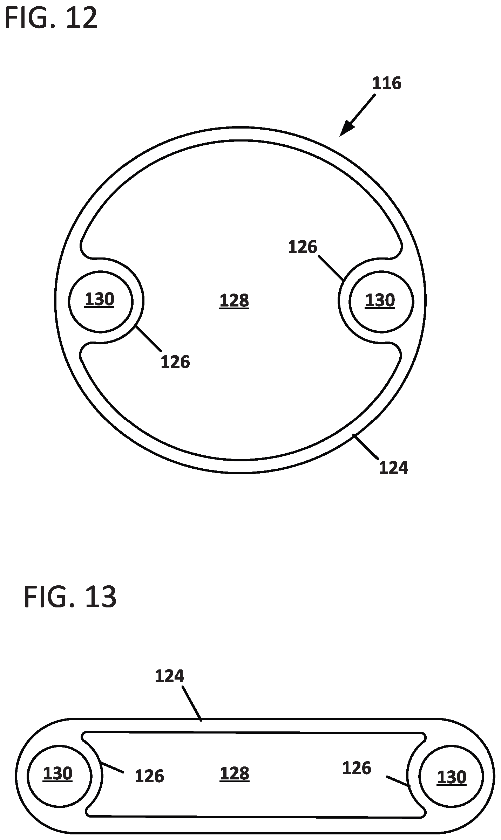

In certain implementations, the inner conduit 126 is rigidly attached to the interior of the outer conduit 124. Fixing the relative positions of the outer and inner conduits 124, 126 inhibits twisting of the inner conduits 126 within the outer conduit 124 during retraction onto the hose reel 114. In some implementations, in some implementations, the inner conduit 126 may be monolithically formed (e.g., molded, extruded, etc.) with the outer conduit 124 (e.g., see FIGS. 12 and 13). In other implementations, the inner conduit 126 may be separately fabricated from the outer conduit 124 and subsequently secured (e.g., by stitching 125, welding, adhesive, etc.) to an inner surface of the outer conduit 124. In still other implementations, the inner conduit 126 may free-float within the outer conduit 124.

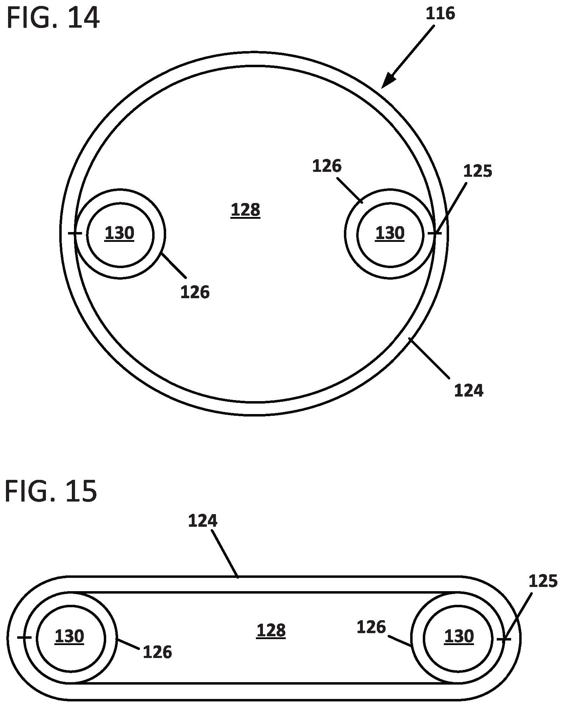

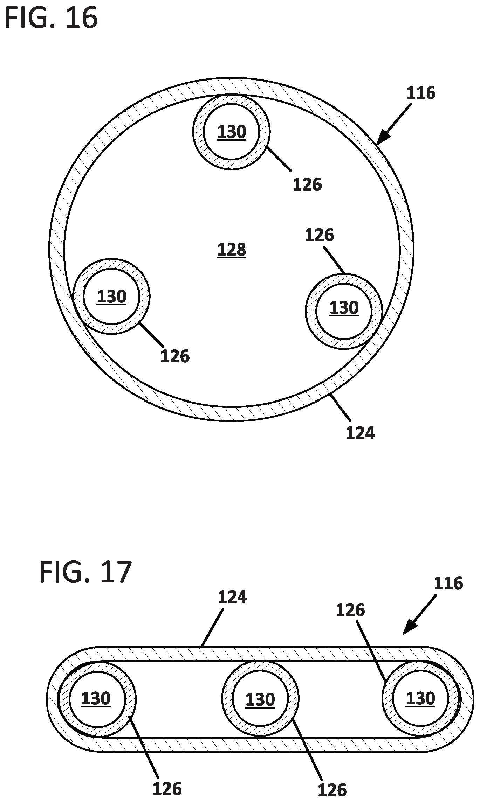

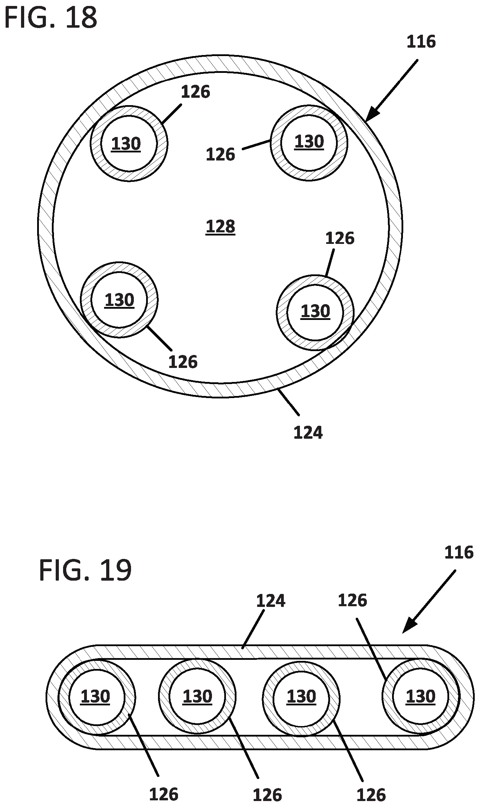

In some implementations, the refueling hose 116 includes a single inner conduit 126 disposed within the outer conduit 124 (e.g., see FIGS. 4 and 5). In other implementations, multiple inner conduits 126 are disposed within the outer conduit 124. In certain implementations, the inner conduits 126 are evenly spaced along an inner circumference of the outer conduit 124 when the outer conduit 124 is disposed in the inflated position. FIGS. 12-15 illustrate example refueling hoses 116 having two inner conduits 126. FIGS. 16 and 17 illustrate an example refueling hose 116 having three inner conduits 126. FIGS. 18 and 19 illustrate an example refueling hose 116 having four inner conduits 126. Additional inner conduits 126 are possible.

Having described the preferred aspects and implementations of the present disclosure, modifications and equivalents of the disclosed concepts may readily occur to one skilled in the art. However, it is intended that such modifications and equivalents be included within the scope of the claims which are appended hereto.

## Claims

1. A hose for use in aerial refueling, the hose comprising:
an outer conduit extending along a first length between proximal and distal ends, the outer conduit defining an interior, the outer conduit being sufficiently flexible to enable collapse of a transverse cross-sectional shape of the outer conduit when empty; and
an inner conduit disposed within the outer conduit, the inner conduit extending along a second length between first and second ends, the first end being disposed at the proximal end of the outer conduit and the second end being disposed at the distal end of the outer conduit, the second end of the inner conduit being open to the interior of the outer conduit at the distal end of the outer conduit, the inner conduit being sufficiently rigid to maintain a transverse cross-sectional shape of the inner conduit along the second length even when empty.

2. The hose of claim 1, wherein the inner conduit is fixed to a circumferential location of the outer conduit along the second length of the inner conduit.

3. The hose of claim 2, wherein the inner conduit is molded to the outer conduit.

4. The hose of claim 2 or claim 3, wherein the inner conduit is reinforced with a metal framework.

5. The hose of any preceding claim, wherein the inner conduit is one of a plurality of inner conduits disposed within the outer conduit.

6. The hose of claim 5, wherein the inner conduits are evenly circumferentially spaced along the interior of the outer conduit.

7. The hose of claim 5 or claim 6, wherein the plurality of inner conduits includes two inner conduits disposed at opposing sides of the outer conduit.

8. The hose of any preceding claim, wherein the outer conduit has a round transverse cross-sectional shape when filled with fluid and an elongate transverse cross-sectional shape when empty.

9. The hose of any preceding claim, further comprising a reception coupling terminating the distal end of the outer conduit, the reception coupling defining an interior that is open to the second end of the inner conduit and to the interior of the outer conduit.

10. A method of aerial refueling a receiver aircraft, the method comprising:
paying out a distal end of a refueling hose from a reel carried by a tanker aircraft;
pumping fuel from the tanker aircraft through a rigid inner conduit within the refueling hose towards the distal end of the refueling hose as the refueling hose is being paid out from the reel; and
enabling the fuel to pass from the rigid inner conduit into a flexible outer conduit of the refueling hose at the distal end of the refueling hose to inflate the flexible outer conduit as the refueling hose is being paid out from the reel.

11. The method of claim 10, further comprising:
opening a reception coupling disposed at the distal end of the refueling hose to enable flow therethrough; and
continuing to pump fuel into the refueling hose and through the reception coupling.

12. The method of claim 11, wherein continuing to pump the fuel comprises pumping the fuel through both the rigid inner conduit and through the flexible outer conduit towards the reception coupling.

13. A method of aerial refueling of a receiver aircraft, the method comprising:
refueling the receiver aircraft from a tanker aircraft via a refueling hose while the refueling hose is disposed in an in-trail position, the refueling hose having a constant transverse cross-sectional shape when in the in-trail position; and
deflating the refueling hose as the refueling hose is wound onto a reel to stow the refueling hose in a lay-flat configuration.

14. The method of claim 13, wherein deflating the refueling hose comprises:
winding the refueling hose onto the reel, thereby pushing fuel disposed within a flexible outer conduit of the refueling hose towards a distal end of the refueling hose; and
enabling the pushed fuel to enter a rigid inner conduit of the refueling hose at the distal end of the refueling hose, thereby evacuating the fuel from the outer conduit.

15. The method of claim 14, further comprising stowing the refueling hose on the reel in the lay-flat configuration, wherein the outer conduit is collapsed around the inner conduit when the refueling hose is disposed in the lay-flat configuration.
